(19) Europäisches Patentamt
European Patent Office
Office européen des brevets

(11) **EP 3 134 469 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **15710144.5**

(22) Anmeldetag: **05.03.2015**

(51) Int Cl.:
*C08K 3/04* *(2006.01)*   *C08L 7/02* *(2006.01)*
*C08L 9/08* *(2006.01)*   *C08L 9/00* *(2006.01)*
*C08L 21/00* *(2006.01)*

(86) Internationale Anmeldenummer:
**PCT/EP2015/054587**

(87) Internationale Veröffentlichungsnummer:
**WO 2015/161950 (29.10.2015 Gazette 2015/43)**

(54) **KAUTSCHUKMISCHUNG UND FAHRZEUGREIFEN**

RUBBER MIXTURE AND VEHICLE TIRES

MÉLANGE DE CAOUTCHOUC ET PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2014 DE 102014207668**

(43) Veröffentlichungstag der Anmeldung:
**01.03.2017 Patentblatt 2017/09**

(73) Patentinhaber: **Continental Reifen Deutschland GmbH**
**30165 Hannover (DE)**

(72) Erfinder:
• **JUNGK, Juliane**
**30916 Isernhagen (DE)**
• **JAGST, Eda**
**30657 Hannover (DE)**
• **WANGENHEIM, Ulrike**
**30966 Hemmingen (DE)**

(74) Vertreter: **Continental Corporation**
**c/o Continental AG**
**Intellectual Property**
**Postfach 169**
**30001 Hannover (DE)**

(56) Entgegenhaltungen:
**US-A- 4 500 672   US-A1- 2004 092 647**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Kautschukmischung, insbesondere für Laufstreifen von Fahrzeugreifen, und einen Fahrzeugreifen.

Die Kautschukzusammensetzung des Laufstreifens bestimmt in hohem Maße die Fahreigenschaften eines Reifens, insbesondere eines Fahrzeugreifens.

Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugreifen, Gurte, Riemen und Schläuche sehr hohe Anforderungen gestellt.

Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf das Abriebverhalten und den erhöhten Wärmeaufbau, der eine schlechtere Rückprallelastizität, folglich einen schlechteren Rollwiderstand bedingt.

US 2004/0092647 A1 offenbart eine Kautschukmischung umfassend (vgl. Anspruch 1) ein natürliches Isopren oder ein synthetisches Polyisopren als ein Hauptbestandteil der Elastomermatrix und einen Füllstoff umfassend Ruß, wobei der Ruß unter anderem eine Jodabsorptionszahl im Bereich von 45 - 70mg/g und einen DBP-Wert im Bereich von 115 - 170ml/100g aufweist.

US 4,500,672 A offenbart eine Kautschukmischung, welche hergestellt wird aus 100 phr Kautschuk mit 25 - 250 phr Ruß, wobei der Ruß einen elektronenmikroskopischen Durchschnittspartikeldurchmesser von über 31 millimicron, 1 Jodabsorptionszahl von 35 bis 60 mg/g und eine DBP - Zahl von 90 bis 150 mm/100g auf (vgl. Anspruch 1).

Der vorliegenden Erfindung liegt die Aufgabe zugrunde, eine Kautschukmischung bereitzustellen, die auf einem hohen Niveau hinsichtlich des Zielkonfliktes Abriebverhalten versus Rollwiderstand liegt und gleichzeitig eine hohe Steifigkeit aufweist, ohne dass die Prozessierbarkeit sowie die sonstigen Reifeneigenschaften, wie insbesondere das Handling-Verhalten und/oder die Nassgriffeigenschaften und/oder die Reißeigenschaften, wie Widerstand gegenüber Rissbildung und Rissfortpflanzung, signifikant nachteilig beeinflusst werden.

Gelöst wird diese Aufgabe durch eine Kautschukmischung, die wenigstens die folgenden Bestandteile enthält:

- 5 bis 50 phr wenigstens eines Butadienkautschuks und
- 30 bis 150 phr zumindest eines Rußes, der eine DBP-Zahl gemäß ASTM D 2414 von 130 bis 200 ml/100 g und eine Jodadsorptionszahl gemäß ASTM D 1510 von 40 bis 75 g/kg und einen Verteilungsindex DI von 1,00 bis 1,10 aufweist, wobei DI aus der mittels DCP (*engl.* "disk centrifuge photosediometer") bestimmten Partikelgrößenverteilung (Massenverteilung gegen Stokes-Durchmesser) gemäß Formel I) berechnet wird:

$$\text{I)} \qquad DI = D_W/D_{mode,}$$

wobei

$D_{mode}$ das Maximum der Partikelgrößenverteilungsfunktion und damit der häufigste Stokes-Durchmesser ist, und
$D_w$ der gewichtete durchschnittliche Stokes-Durchmesser ist, der aus der Partikelgrößenverteilungsfunktion gemäß Formel II) bestimmt wird:

$$\text{II)} \qquad D_w = \sum (n_iD_i^5 / n_iD_i^4),$$

wobei

i eine Laufzahl für den jeweiligen Messwert ist, und
n die Häufigkeit der Massenverteilung in der Einheit Gewichtsprozent ist, und
D der jeweilige zugehörige Stokes-Durchmesser ist.

Überraschenderweise zeigt die Kautschukmischung durch die Kombination der oben genannten Bestandteile im Vergleich zum Stand der Technik verbesserte Rollwiderstandseigenschaften und ein verbessertes Abriebverhalten, wobei die Kautschukmischung insbesondere eine höhere Abriebresistenz aufweist und dadurch bei entsprechender Beanspruchung im Vergleich zum Stand der Technik einen geringeren Materialverlust zeigt. Gleichzeitig weist die Kautschukmischung eine höhere Steifigkeit auf, wobei die sonstigen Reifeneigenschaften, insbesondere die Reißeigenschaften, nicht signifikant und/oder gar nicht negativ beeinträchtigt sind.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Erfindungsgemäß enthält die Kautschukmischung zumindest einen Dienkautschuk, wobei sie 5 bis 50 phr wenigstens eines Butadienkautschuks enthält.

Bevorzugt ist der Dienkautschuk ausgewählt aus der Gruppe bestehend aus natürlichem Polyisopren (NR) und/oder synthetischem Polyisopren (IR) und/oder Butadien-Kautschuk (BR) und/oder lösungspolymerisiertem Styrol-Butadien-Kautschuk (SSBR) und/oder emulsionspolymerisiertem Styrol-Butadien-Kautschuk (ESBR) und/oder Flüssigkautschuken mit einem Molekulargewicht $M_w$ von größer als 20000 g/mol und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder AcrylatKautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk, wobei die Kautschuke modifiziert sein können, und wobei die Kautschukmischung 5 bis 50 phr wenigstens eines Butadienkautschuks enthält. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Besonders bevorzugt ist der Dienkautschuk ausgewählt aus der Gruppe bestehend aus synthetischem Polyisopren und natürlichem Polyisopren und Polybutadien, wobei die Kautschukmischung 5 bis 50 phr wenigstens eines Butadienkautschuks enthält. Bevorzugt handelt es sich bei dem Dienkautschuk zumindest um natürliches Polyisopren. Hiermit wird eine besonders gute Verarbeitbarkeit (Extrudierbarkeit, Mischbarkeit, etc.) der erfindungsgemäßen Kautschukmischung erzielt.

Erfindungsgemäß enthält die Kautschukmischung 5 bis 50 phr, bevorzugt 5 bis 40 phr, besonders bevorzugt 5 bis 30 phr, ganz besonders bevorzugt 2 bis 20 phr, wiederum bevorzugt 5 bis 10 phr, wenigstens eines Butadienkautschuks.

Gemäß einer vorteilhaften Ausführungsform der Erfindung enthält die Kautschukmischung 60 bis 95 phr zumindest eines natürlichen Polyisoprens und 5 bis 40 phr zumindest eines Butadienkautschuks.

Die erfindungsgemäße Kautschukmischung enthält 30 bis 150 phr, bevorzugt 40 bis 150 phr, besonders bevorzugt 40 bis 110 phr, ganz besonders bevorzugt 40 bis 80 phr, zumindest eines Rußes als Füllstoff, wobei der Ruß eine DBP-Zahl gemäß ASTM D 2414 von 130 bis 200 ml/100 g und eine Jodadsorptionszahl gemäß ASTM D 1510 von 40 bis 75 g/kg und einen Verteilungsindex DI von 1,00 bis 1,10 aufweist, wobei DI aus der mittels DCP (*engl.* "disk centrifuge photosediometer") bestimmten Partikelgrößenverteilung (Massenverteilung gegen Stokes-Durchmesser) gemäß Formel I) berechnet wird:

$$\text{I)} \qquad DI = D_W/D_{mode,}$$

wobei

$D_{mode}$ das Maximum der Partikelgrößenverteilungsfunktion und damit der häufigste Stokes-Durchmesser ist, und $D_W$ der gewichtete durchschnittliche Stokes-Durchmesser ist, der aus der Partikelgrößenverteilungsfunktion gemäß Formel II) bestimmt wird:

$$\text{II)} \qquad D_W = \sum (n_iD_i^5 / n_iD_i^4),$$

wobei

i die Probennummer ist, und

n die Häufigkeit der Massenverteilung in der Einheit Gewichtsprozent ist, und

D der jeweilige zugehörige Stokes-Durchmesser ist.

Mit einem solchen Ruß wird der Zielkonflikt zwischen Rollwiderstandsverhalten und Abriebeigenschaften der erfindungsgemäßen Kautschukmischung auf einem besonders hohen Niveau gelöst.

Ein derartiger Ruß ist bspw. unter dem Handelsnamen CD2123 von der Fa. Birla Carbon erhältlich.

Hiermit werden für die Anwendung im Fahrzeugreifen besonders gute Abrieb-und Rollwiderstandseigenschaften erzielt, wobei die sonstigen Eigenschaften, wie insbesondere die Reißeigenschaften, gleich bleiben und/oder sogar verbessert werden.

Die Bestimmung der Partikelgrößenverteilung (Massenverteilung gegen Stokes-Durchmesser) sowie des Verteilungsindex DI gemäß Formel I) erfolgt mittels DCP (*engl.* "disk centrifuge photosediometer"), also Scheiben-Photosedimentationszentrifuge (Scheibenzentrifuge Brookhaven BI-DCP; Rußstandard C6; Ultraschall-Prozessor (Fa. Hielscher) Typ UP 200S mit Sonotrode S14).

Hierbei wird eine Rußprobe (mit Achatmörser vorsichtig zerdrückt) in wässriger Lösung

(0,5 g Nonidet™ P40 Substitute (Octylphenoxypolyethoxyethanol) und 200 mL Ethanol in 1000 mL Messkolben, mit destilliertem Wasser auf 1000 mL aufgefüllt, pH-Wert mit 0,1 mol NaOH (Natriumhydroxid) auf 9 bis 10 eingestellt) dispergiert und in einer Scheibenzentrifuge aufgetrennt.

Bei der Probenvorbereitung werden 20 mg der zerdrückten Rußprobe mit 20 mL der beschriebenen wässrigen Lösung (Dispersionslösung) versetzt und anschließend in ein Eisbad gestellt und 4,5 Minuten mit Ultraschall behandelt (Ultraschall 100 W-Leistung, 80 % Pulse).

Spinflüssigkeit:

In einem 1000 ml Messkolben werden 0,25 g Nonident eingewogen und mit dest.

Wasser bis zur Marke aufgefüllt. Der pH Wert der Lösung wird mit einer 0,1 mol NaOH auf 9 bis 10 eingestellt.

Durchführung der Messung: Vor der Messung, bei entsprechende Geschwindigkeit (Aktiv-CB: 11000 U/min, Halbaktiv-CB: 6500 U/min), wird die Zentrifuge mindestens 30 min warmlaufen gelassen; 0,85 ml Ethanol werden in die stehende leere Scheibe eingespritzt und der Motor gestartet.

Danach wird mit 15 ml Spinflüssigkeit (aus Dispensette) unterschichtet. Nach einer Zugabe von 0,15 ml Ethanol wartet man ca. 1 min und spritzt zügig und vorsichtig 250 $\mu$l dispergierte Rußprobe; Computerprogram starten; anschließend wird mit 50 $\mu$l Dodecan überschichtet.

Nach dem Ablauf der Messung werden die Resultate automatisch gespeichert und angezeigt.

Nach jeder Durchführung wird die Probe aufgeschüttelt (Button "MIX") und aus der Scheibe abgesaugt.

Von jeder Probe wird eine Doppelbestimmung durchgeführt.

Die Detektion erfolgt mittels eines Lichtstrahls, wobei die Lichtschwächung (Extinktion) gemessen wird.

Die Auswertung der Rohdatenkurve erfolgt dann mit dem Rechenprogramm des Gerätes unter Berücksichtigung der Streulichtkorrektur und mit automatischer Anpassung der Basislinie. Hieraus werden $D_w$ und $D_{mode}$ berechnet.

$D_w$ und $D_{mode}$ sind wie oben aufgeführt Größenangaben, die aufgrund der Größenordnung zweckmäßig in nm (Nanometer) angegeben werden.

Die erfindungsgemäße Kautschukmischung kann neben Ruß noch weitere bekannte polare und/oder unpolare Füllstoffe enthalten. Hierbei kann es sich um alle dem Fachmann bekannten Füllstoffe handeln, wie Kieselsäure, Alumosilicate, Ruß, Kohlenstoffnanoröhrchen, Kreide, Stärke, Magnesiumoxid, Titandioxid oder Kautschukgele. Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und CarbonylGruppen) enthält.

Auch Graphit und Graphene sowie sogenannte "carbon-silica dual-phase filler" sind als Füllstoff denkbar.

Zinkoxid wird im Rahmen der vorliegenden Erfindung nicht als Füllstoff betrachtet.

Bevorzugt ist in der erfindungsgemäßen Kautschukmischung Ruß als alleiniger Füllstoff oder als Hauptfüllstoff enthalten, das heißt, dass die Rußmenge deutlich größer ist als die Menge an ggf. anderen enthaltenen Füllstoffen. Für den Fall, dass neben Ruß ein weiterer Füllstoff enthalten ist, handelt es sich bei diesem bevorzugt um Kieselsäure. Somit ist es auch denkbar, dass die erfindungsgemäße Kautschukmischung Ruß und Kieselsäure enthält, wie z.B. 30 bis 150 phr Ruß in Kombination mit 0,1 bis 30 phr Kieselsäure.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 $m^2$/g, bevorzugt von 35 bis 260 $m^2$/g, besonders bevorzugt von 100 bis 260 $m^2$/g und ganz besonders bevorzugt von 130 bis 235 $m^2$/g, und eine CTAB-Oberfläche (gemäß ASTM D 3765) von 30 bis 400 $m^2$/g, bevorzugt

von 30 bis 250 m$^2$/g, besonders bevorzugt von 100 bis 250 m$^2$/g und ganz besonders bevorzugt von 125 bis 230 m$^2$/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH$_2$ oder -S$_x$- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden. Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften. Weiterhin kann die erfindungsgemäße Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Es können in der Kautschukmischung noch 0 bis 70 phr, bevorzugt 0,1 bis 60 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),

b) Aktivatoren, wie z. B. Zinkoxid und Fettsäuren (z. B. Stearinsäure),

c) Wachse,

d) Harze, insbesondere Klebharze, und

e) Mastikationshilfsmittel, wie z. B. 2,2'-Dibenzamidodiphenyldisulfid (DBD) und

f) Verarbeitungshilfsmittel, wie z.B. Fettsäuresalze, wie z.B. Zinkseifen, und

Fettsäureester und deren Derivate, wie z.B. PEG-Carbonsäureester.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis10 phr, bevorzugt 0,2 bis 8 phr, besonders bevorzugt 0,2 bis 4 phr, Zinkoxid (ZnO). Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m$^2$/g auf. Es kann aber auch so genanntes nano-Zinkoxid mit einer BET-Oberfläche von 10 bis 60 m$^2$/g verwendet werden.

Die Vulkanisation der erfindungsgemäßen Kautschukmischung wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Die Begriffe Schwefelspender und schwefelspendende Substanz werden im Rahmen dieser Anmeldung synonym verwendet. Des Weiteren ist der Begriff Schwefeldonor für Schwefelspender gebräuchlich.

Der Beschleuniger ist ausgewählt aus der Gruppe enthaltend Thiazolbeschleuniger und/oder Mercaptobeschleuniger und/oder Sulfenamidbeschleuniger und/oder Thiocarbamatbeschleuniger und/oder Thiurambeschleuniger und/oder Thiophosphatbeschleuniger und/oder Thioharnstoffbeschleuniger und/oder Xanthogenat-Beschleuniger und/oder Guanidin-Beschleuniger.

In einer bevorzugten Ausführungsform der Erfindung wird ein Sulfenamidbeschleuniger, der ausgewählt ist aus der Gruppe enthaltend N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS) verwendet.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

$$\text{A)} \qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).

Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer 4 vernetzen, wie in der WO 2010/049261 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.

Die erfindungsgemäße Kautschukmischung enthält bevorzugt wenigstens eines dieser Vulkanisationsmittel, wodurch sich aus der erfindungsgemäßen Kautschukmischung Vulkanisate, insbesondere für die Anwendung im Fahrzeugreifen, herstellen lassen.

Außerdem können in der Kautschukmischung Vulkanisationsverzögerer vorhanden sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems, bestehend aus Schwefel und Schwefelspender sowie den genannten Beschleunigern, in einer letzten Mischstufe wird die Fertigmischung erzeugt. Die Fertigmischung wird z.B. durch einen Extrusionsvorgang weiterverarbeitet und in die entsprechende Form gebracht.

Eine weitere Aufgabe der vorliegenden Erfindung besteht darin, einen Fahrzeugreifen bereitzustellen, der sich durch ein hohes Niveau hinsichtlich des Zielkonfliktes Abriebverhalten versus Rollwiderstand liegt und gleichzeitig eine gutes Handling-Verhalten aufweist, ohne dass seine Prozessierbarkeit sowie die sonstigen Reifeneigenschaften, wie insbesondere das Handling-Verhalten und/oder die Nassgriffeigenschaften und/oder die Reißeigenschaften, wie Widerstand gegenüber Rissbildung und Rissfortpflanzung, signifikant nachteilig beeinflusst werden.

Gelöst wird diese Aufgabe dadurch, dass der Fahrzeugreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, hängen die Abriebresistenz und das Rollwiderstandsverhalten von Fahrzeugreifen maßgeblich von dem Abriebverhalten und dem Dämpfungsverhalten der Kautschukmischung des Laufstreifens ab.

Bevorzugt handelt es sich um einen Fahrzeugluftreifen.

Bevorzugt ist der Fahrzeugreifen für LKW geeignet.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Tangentialinnenmischer. Aus sämtlichen Mischungen wurden Prüfkörper durch optimale Vulkanisation unter Druck bei 140 °C hergestellt und mit diesen Prüfkörpern für die Kautschukindustrie typische Materialeigenschaften mit den im Folgenden angegebenen Testverfahren ermittelt.

- Shore-A-Härte bei Raumtemperatur (RT) gemäß DIN ISO 7619-1
- Rückprallelastizität bei Raumtemperatur (RT) und 70 °C gemäß DIN 53 512
- Zugfestigkeit, Bruchdehnung und Spannungswert bei 300 % Dehnung (M300) bei Raumtemperatur gemäß DIN 53 504
- Verlustfaktor tan □(tangens delta) aus dynamisch-mechanischer temperaturabhängiger Messung gemäß DIN 53 513, Temperaturdurchlauf (engl. "temperature sweep")
- Abrieb bei Raumtemperatur gemäß DIN53 516 bzw. DIN/ISO 4649
- Umsatzzeiten von 10% Umsatz ($t_{10}$ Anvulkanisationszeit) und 90% Umsatz ($t_{90}$, Ausvulkanisationszeit) mittels rotorlosem Vulkameter (MDR = Moving Disc Rheometer) gemäß DIN 53 529
- Mooney-Viskosität ML (1+3) gemäß ASTM D1646

Tabelle 1

| Bestandteile | Einheit | V1 | E1 |
|---|---|---|---|
| NR: TSR | phr | 90 | 90 |
| BR | phr | 10 | 10 |
| Ruß N339 [d)] | phr | 43 | - |
| Ruß [a)] | phr | - | 43 |
| Kieselsäure [b)] | phr | 6 | 6 |
| Silan [c)] | phr | 0,75 | 0,75 |
| Weichmacher | phr | 1 | 1 |
| Alterungsschutzmittel | phr | 4,5 | 4,5 |
| Stearinsäure | phr | 2 | 2 |
| ZnO | phr | 3 | 3 |

(fortgesetzt)

| Bestandteile | Einheit | V1 | E1 |
|---|---|---|---|
| Beschleuniger TBBS | phr | 0,75 | 0,75 |
| Schwefel | phr | 1,4 | 1,4 |
| **Physik. Eigenschaften** | | | |
| Mooney-Viskosität | Mooney | 71 | 73 |
| $t_{10}$ | min | 2,8 | 3,0 |
| Shore Härte RT | Shore A | 58 | 60 |
| Rückprallelast. bei RT | % | 53 | 56 |
| Rückprallelast. bei 70 °C | % | 65 | 68 |
| Tangens delta b. -2 °C | 0,2274 | 0,2274 | 0,2058 |
| Tangens delta b. 70 °C | 0,1259 | 0,1259 | 0,1114 |
| Zugfestigkeit | MPa | 24 | 23 |
| Bruchdehnung | % | 544 | 493 |
| Modul 300 | MPa | 12 | 14 |
| DIN Abrieb | $mm^3$ | 94 | 88 |

Verwendete Substanzen aus Tabelle 1:

    a) Ruß: CD 2123, Fa. Birla Carbon, DBP-Zahl gemäß ASTM D 2414 = 146,8 ml/100g;

    Jodadsorptionszahl gemäß ASTM D 1510 = 59,9 mg/g; $D_w$ = 128 nm;
$D_{mode}$ = 119,5 nm; DI = 1,07

    b) Kieselsäure: Ultrasil® VN 3 GR, Fa. Evonik
    c) Silan: SG SI996, Fa. Nanjing Shuguang Silane Co. Ltd., 75 Gew.-% S2
    d) Ruß Corax N339, Fa. KG DEUTSCHE GASRUSSWERKE GMBH & CO. (DGW): DBP-Zahl gemäß ASTM D 2414 = 120 ml/100g; Jodadsorptionszahl gemäß ASTM D 1510 = 90 mg/g; $D_w$ = 93 nm; $D_{mode}$ = 81 nm; DI = 1,15.

Wie aus Tabelle 1 hervorgeht, weist die erfindungsgemäße Kautschukmischungen E1 gegenüber ihrer Referenz V1 deutlich verbesserte Rollwiderstandseigenschaften auf, was an dem erhöhten Indikator Rückprallelastizität bei 70 °C und dem niedrigeren Wert für den Verlustfaktor tangens delta bei 70 °C der erfindungsgemäßen Kautschukmischung E1 erkennbar ist. Zudem zeigt die erfindungsgemäße Kautschukmischung E1 ein verbessertes Abriebverhalten als V1. Gleichzeitig sind die sonstigen Eigenschaften nicht signifikant und/oder gar nicht negativ beeinträchtigt. Insbesondere weist die erfindungsgemäße Kautschukmischung eine erhöhte Steifigkeit (M 300) auf, was ein Indikator für ein verbessertes Handling-Verhalten ist. Zudem weist die Kautschukmischung E1 gegenüber V1 keine Nachteile hinsichtlich der Prozessierbarkeit dar, wie an den Werten für die Viskosität und die Heizzeit $t_{10}$ erkennbar ist. Insbesondere der Wert für $t_{10}$ ist ein Indiz dafür, dass die Kautschukmischung E1 gegenüber V1 keine Nachteile hinsichtlich einer unerwünschten Vorvernetzung (*engl.* "scorching") insbesondere bei der Extrusion zeigt.

Somit ist es mit den erfindungsgemäßen Kautschukmischungen möglich Fahrzeugreifen, herzustellen, die ein verbessertes Rollwiderstandsverhalten und eine höhere Abriebresistenz aufweisen ohne Nachteile hinsichtlich der sonstigen Anforderungen zu zeigen.

**Patentansprüche**

**1.** Kautschukmischung enthaltend wenigstens die folgenden Bestandteile:

    - 5 bis 50 phr wenigstens eines Butadienkautschuks und
    - 30 bis 150 phr zumindest eines Rußes, der eine DBP-Zahl gemäß ASTM D 2414 von 130 bis 200 ml/100 g und eine Jodadsorptionszahl gemäß ASTM D 1510 von 40 bis 75 g/kg und einen Verteilungsindex DI von 1,00 bis 1,10 aufweist, wobei DI aus der mittels DCP (*engl.* "disk centrifuge photosediometer") bestimmten Partikelgrößenverteilung (Massenverteilung gegen Stokes-Durchmesser) gemäß Formel I) berechnet wird:

$$I) \qquad DI = D_W/D_{mode},$$

wobei

$D_{mode}$ das Maximum der Partikelgrößenverteilungsfunktion und damit der häufigste Stokes-Durchmesser ist, und
$D_w$ der gewichtete durchschnittliche Stokes-Durchmesser ist, der aus der Partikelgrößenverteilungsfunktion gemäß Formel II) bestimmt wird:

$$II) \qquad D_w = \sum (n_i D_i^5 / n_i D_i^4),$$

wobei

i eine Laufzahl für den jeweiligen Messwert ist, und
n die Häufigkeit der Massenverteilung in der Einheit Gewichtsprozent ist, und
D der jeweilige zugehörige Stokes-Durchmesser ist.

2. Kautschukmischung nach Anspruch 1, **dadurch gekennzeichnet, dass** zumindest natürliches und/oder synthetisches Polyisopren als Dienkautschuk enthalten ist.

3. Kautschukmischung nach einem der vorherigen Ansprüche, **dadurch gekennzeichnet, dass** sie 50 bis 100 phr wenigstens eines natürlichen Polyisoprens enthält.

4. Fahrzeugreifen, **dadurch gekennzeichnet, dass** er in wenigstens einem Bauteil eine Kautschukmischung nach einem der vorhergehenden Ansprüche enthält.

5. Fahrzeugreifen nach Anspruch 4, **dadurch gekennzeichnet, dass** es sich bei dem Bauteil um einen Laufstreifen handelt.

**Claims**

1. Rubber mixture comprising at least the following constituents:

- 5 to 50 phr of at least one butadiene rubber and
- 30 to 150 phr of at least one carbon black having a DBP number according to ASTM D 2414 of 130 to 200 ml/100 g and an iodine adsorption number according to ASTM D 1510 of 40 to 75 g/kg and a distribution index DI of 1.00 to 1.10, wherein DI is calculated from the particle size distribution (mass distribution versus Stokes diameter) determined by DCP (disc centrifuge photosediometer) according to formula I):

$$I) \quad DI = D_{\bar{W}}/D_{mode}$$

wherein

$D_{mode}$ is the maximum of the particle size distribution function and thus the most frequent Stokes diameter and
$D_w$ is the weighted average Stokes diameter determined from the particle size distribution function according to formula II):

$$II) \quad D_{\bar{W}} = \sum (n_i D_i^5/n_i D_i^4)$$

wherein

i is an index for the respective measured value and
n is the frequency of the mass distribution in units of percent by weight and
D is the respective associated Stokes diameter.

2. Rubber mixture according to Claim 1, **characterized in that** at least natural and/or synthetic polyisoprene is present as the diene rubber.

3. Rubber mixture according to either of the preceding claims, **characterized in that** it comprises 50 to 100 phr of at least one natural polyisoprene.

4. Vehicle tyre, **characterized in that** it comprises in at least one component a rubber mixture according to any of the preceding claims.

5. Vehicle tyre according to Claim 4, **characterized in that** the component is a tread.


**Revendications**

1. Mélange de caoutchouc contenant au moins les constituants suivants :

- 5 à 50 pce d'au moins un caoutchouc de butadiène et
- 30 à 150 pce d'au moins un noir de carbone, qui présente un indice DBP selon l'ASTM D 2414 de 130 à 200 ml/100 g et un indice d'adsorption d'iode selon l'ASTM D 1510 de 40 à 75 g/kg et un indice de distribution DI de 1,00 à 1,10, le DI étant calculé à partir de la distribution des tailles de particules (distribution de masse contre le diamètre de Stokes) déterminée par DCP (en anglais « disk centrifuge photosediometer ») selon la formule I) :

$$I) \quad DI = D_w/D_{mode},$$

dans laquelle

$D_{mode}$ est le maximum de la fonction de distribution des tailles de particules et est par conséquent le diamètre de Stokes le plus fréquent, et
$D_w$ est le diamètre de Stokes moyen pondéré, qui est déterminé à partir de la fonction de distribution des tailles de particules selon la formule II) :

$$II) \quad D_w = \Sigma(n_i D_i^5/n_i D_i^4),$$

dans laquelle

i est un numéro de séquence pour la valeur de mesure respective, et
n est la fréquence de la distribution de masse dans l'unité pourcentage en poids, et
D est le diamètre de Stockes correspondant respectif.

2. Mélange de caoutchouc selon la revendication 1, **caractérisé en ce qu'au** moins du polyisoprène naturel et/ou synthétique est contenu en tant que caoutchouc diénique.

3. Mélange de caoutchouc selon l'une quelconque des revendications précédentes, **caractérisé en ce qu'**il contient 50 à 100 pce d'au moins un polyisoprène naturel.

4. Pneu de véhicule, **caractérisé en ce qu'**il contient un mélange de caoutchouc selon l'une quelconque des revendications précédentes dans au moins un composant.

5. Pneu de véhicule selon la revendication 4, **caractérisé en ce que** le composant consiste en une bande de roulement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040092647 A1
- US 4500672 A
- DE 102006004062 A1
- WO 9909036 A
- WO 2008083241 A1
- WO 2008083242 A1
- WO 2008083243 A1
- WO 2008083244 A1
- EP 2589619 A1
- WO 2010049261 A2